# EUROPEAN PATENT APPLICATION

(11) **EP 0 817 505 A2**
(43) Date of publication of application: **07.01.1998**
(21) Application number: 97110246.2
(22) Date of filing: 23.06.1997
(51) Int. Cl.: H04N 9/28

(54) **Digital convergence system**

(30) Priority: 24.06.1996 JP 162632/96; 15.10.1996 JP 271964/96
(71) Applicant: MATSUSHITA ELECTRIC INDUSTRIAL CO., LTD., Kadoma-shi, Osaka 571 (JP)
(72) Inventor: Go, Hideyuki, Takatsuki-shi 569 (JP); Masumoto, Junji, Ibaraki-shi, Osaka 567 (JP); Sakanishi, Yasuaki, Takatsuki-shi, Osaka 569 (JP)
(74) Representative: Kügele, Bernhard

(57) **Abstract**

An apparatus to adjust digital convergence while displaying the external video signal (7). The cursor/test pattern signal is generated by the control signal of an address controller (3). A video circuit (6) selects and displays either one or both of the output of a cursor/test pattern generator (4) and the external video signal (7) on the screen. Adjustment points on the screen may be selected using a control panel (16). The apparatus allows data adjustment of all points which are on the same line as the selected adjustment point with data identical to that of the selected adjustment point. The phase of the correction data read from the nonvolatile memory can be adjusted by moving a mark created from data stored in the nonvolatile memory (14) to the screen center using the up, down, left, and right keys on the control panel (16).

## Description

### FIELD OF THE INVENTION

The present invention relates to the field of convergence systems for color television sets and CRT displays and, more particularly, to digital convergence systems which can accurately correct convergence.

### BACKGROUND OF THE INVENTION

In color projection TVs which magnify and project images onto a screen using three projection tubes for emitting three primary colors, discoloration occurs on the screen due to differences in the incident angle of each projection tube toward the screen.

In general, the method adopted for overlapping these images of three primary colors is, known as convergence. This involves creating a convergence correction waveform, based on the analog signal, which synchronizes the horizontal and vertical scanning period, and adjusting the amplitude of each waveform. This method has a disadvantage, however, with respect to convergence accuracy. Therefore, a digital convergence system which can adjust a range of signals having different numbers of scanning lines has been developed as a method for converging images with higher accuracy. One known digital convergence system is disclosed as Japanese Utility Model Laid-open Patent No. H4-58690.

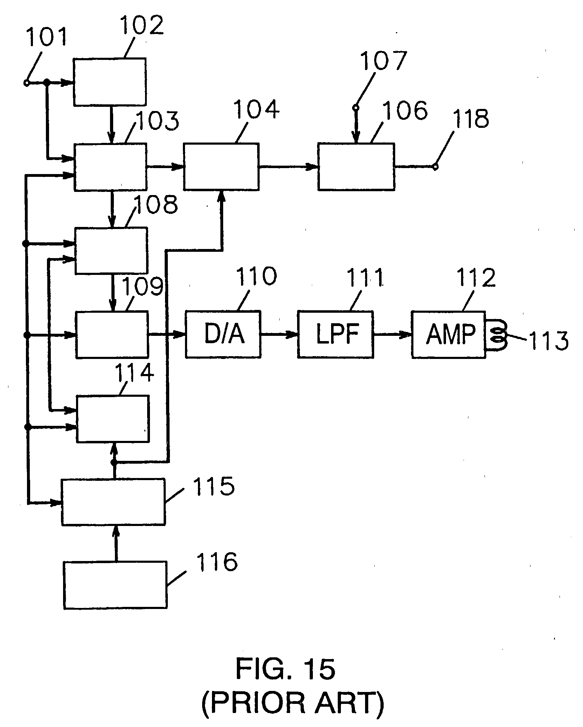

Configuration of a digital convergence system of the prior art is explained with reference to Fig. 15. A synchronizing signal 101 synchronized to the deflecting current period is input to an address controller 103 and a scanning line counter 102.

The scanning line counter 102 determines the number of scanning lines per frame based on the input synchronizing signal 101 and outputs its result to the address controller 103.

The address controller 103 outputs a signal for controlling a test pattern generator 104 and a vertical interpolation processor 108 based on the number of scanning lines per frame as indicated by the scanning line counter 102.

The test pattern generator 104 generates a test pattern signal based on the control signal input from a microcomputer 115 operated by a control panel 116, a signal input part, and the control signal input from the address controller 103.

In the same way, the vertical interpolation processor 108 calculates the interpolation of vertical convergence between adjustment points as explained later, based on the control signal input from the microcomputer 115 operated by the control panel 116 and the control signal input from the address controller 103.

A video circuit 106 selects either the output of the test pattern generator 104 or an external video signal 107 and outputs signal 118 to display an image on a projection screen (not illustrated).

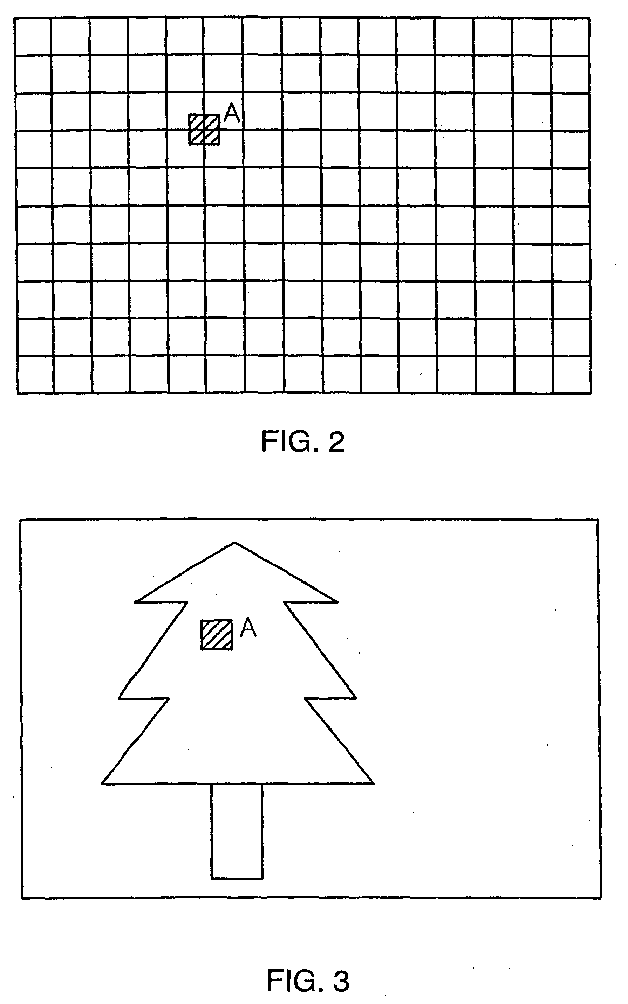

When the video circuit 106 selects the output of the test pattern generator 104, a test pattern illustrated in Fig. 2 (for example, a cross-hatch pattern) is displayed on the projection screen. Point A in Fig. 2 indicates the position of the cursor.

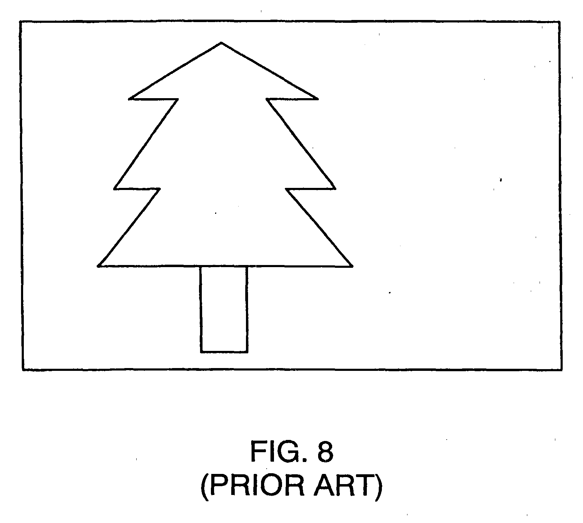

When the video circuit 106 selects the external video signal 107, an image of the external video signal such as Fig. 8 is displayed on the screen.

While the external video signal 107 is displayed on the projection screen, digital convergence correction cannot be performed.

Convergence is adjustable by writing correction data into a nonvolatile memory 114, using a data write key on the control panel 116 while looking at the screen for each color to be corrected, such as red for example.

There are three ways to write correction data: 1) Adding/subtracting certain correction data to/from correction data of the position pointed to with the cursor; 2) simultaneously adding/subtracting the same value to/from each correction data of all adjustment points on the same vertical line as the cursor position; and 3) simultaneously adding/subtracting the same value to/from each correction data of all adjustment points on the same horizontal line as the cursor position.

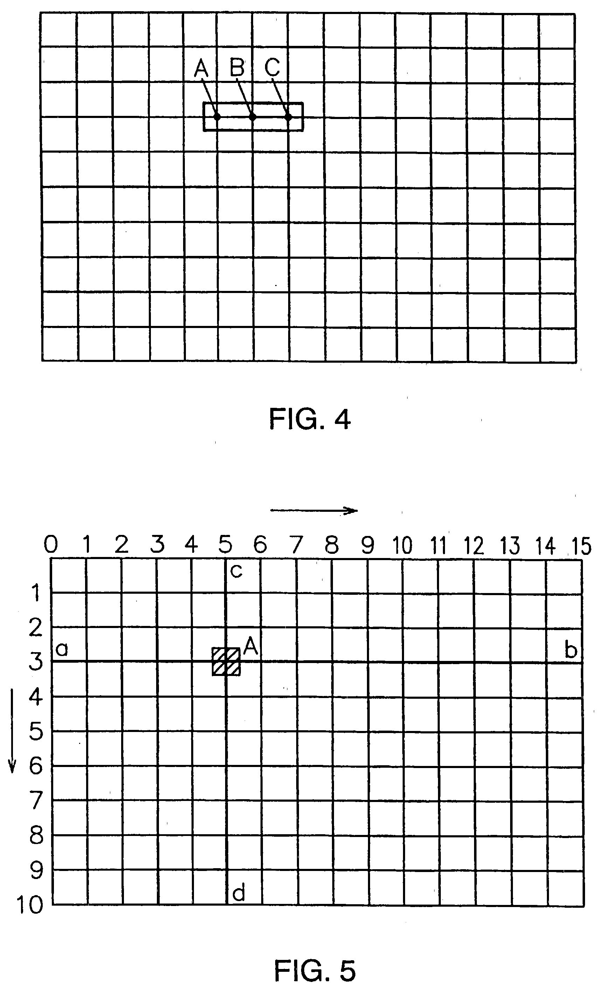

Fig. 5 is an image of the above test pattern. Point A in Fig. 5 shows the position of the cursor, i.e., the point to be adjusted. The numbers in Fig. 5 indicate positions of the adjustment points: 0 to 15 in the horizontal direction and 0 to 10 in the vertical direction. Hereafter, the position of any adjustment point is indicated using these numbers as (abscissa, ordinate).

In Fig. 5, cursor position A can be expressed as (5, 3). Numbers and characters in Fig. 5 are not displayed on the screen. Line (a-b) in Fig. 5 indicates adjustment points on the same horizontal line as the cursor position, in this case (ordinate = 3). Line (c-d) in Fig. 5 indicates adjustment points on the same vertical line as the cursor position, in this case (abscissa = 5). How the convergence is adjusted is explained with reference to adjustment points on (ordinate = 3).

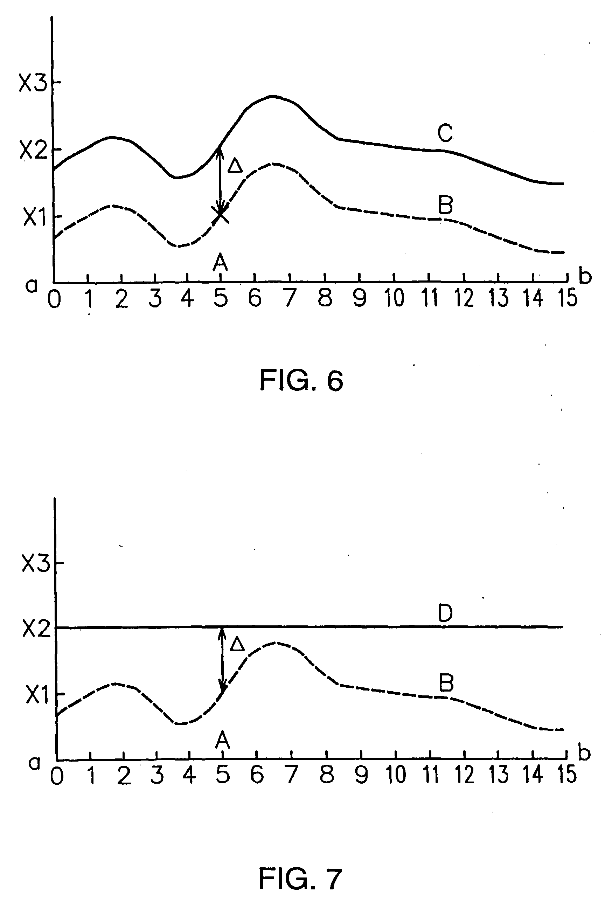

The horizontal axis in Fig. 6 indicates the abscissa of adjustment points on (ordinate =3). The vertical axis is correction data.

The broken line in Fig. 6 is a line connecting correction data of each adjustment point before adjustment. For example, correction data of the cursor position A is X1.

Here, a mode for simultaneously adjusting the correction data of all adjustment points on the same horizontal line as the cursor is selected.

If adjustment data of Point A is increased by Δ, the correction data of all adjustment points on the same horizontal line (a-b), in other words points on (ordinate = 3), will be increased by Δ. Thus, a line connecting correction data after adjustment will form curve C where Δ is added to the entire line.

In this way correction data on the same horizontal line is adjusted simultaneously.

Correction data on the same vertical line is adjustable in the same way as that for points on the same horizontal line.

For handling several video signal sources, such as those with different number of scanning lines, it is necessary to interpolate between adjustment points in response to the number of scanning lines. The vertical interpolation processor 108 calculates vertical interpolation based on correction data in the nonvolatile memory 114, and continuously writes the vertical interpolation results to a volatile memory 109.

Convergence correction data stored in volatile memory 109 is converted to analog data by a digital/analog converter (D/A converter) 110, and then smoothed using a low-pass filter circuit (LPF) 111. The output of the LPF 111 is amplified by an amplifier (AMP) 112, and sent to a convergence yoke 113 in the form of a convergence correcting current.

In digital convergence adjustment, convergence is generally corrected by sending current to the convergence yoke after converting correction data into analog data and smoothing its waveform by the LPF. However, actual adjustment position (phase) deviates slightly from an expected adjustment position due to variations in circuit tolerances. Similar problems also occur when the synchronizing phase deviates between that of an internal cross-hatch pattern and an external video signal.

Therefore, a digital convergence system has a mode for adjusting the phase (adjustment position) for reading the correction data (hereafter referred to as the data position mode).

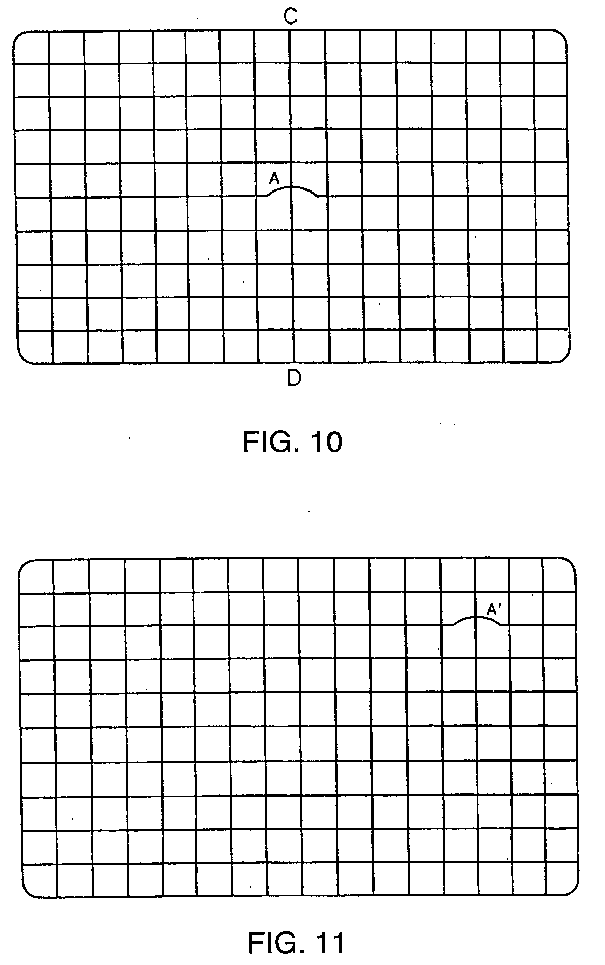

A cross-hatch pattern is used for adjusting the phase in the data position mode. In this adjustment, all convergence correction data to be written to the volatile memory 109 is initially reset to zero. One of the three colors of red, green, and blue (for example, green) is then selected for writing a certain value to the volatile memory 109 only for the correction data which will arrive at the center of the screen. With this operation, as shown in Fig. 10, a small curve is created at a specified position on a specified horizontal line. In other words, the microcomputer 115 and address controller 103 generate data for creating the above curve (a protrusion) based on data stored in the nonvolatile memory 114. This data for creating the protrusion is stored in the nonvolatile memory 114 and used for phase control. The data is then controlled by the address controller 103 and vertical interpolation processor 108, and stored in the volatile memory 109 for use. After use, the data is erased from the volatile memory 109.

Point A' in Fig. 11 shows a partially-curved cross-hatch pattern (protrusion) for green. If the phase for reading correction data from the volatile memory 109 is not controlled appropriately, convergence correction data may be read at the position off the screen center, such as at Point A' in Fig. 11, instead of at Point A (screen center) in Fig. 10.

Looking at the screen, the operator uses the up, down, right, and left cursor keys on control panel 116 in Fig. 15 to move Point A' in Fig. 11 to Point A in Fig. 10. This is accomplished by controlling the phase via control of the microcomputer 115 and the readout of correction data in the address controller 103.

After moving Point A' in Fig. 11 to Point A in Fig. 10, the position is confirmed by matching the protrusion to Line CD running through the center of the screen.

This means that the phase for reading the correction data is controlled only in the horizontal direction.

As explained above, color TVs employ a digital convergence system for adjusting digital convergence using a control panel, while looking at the screen which displays a cross-hatch pattern and the cursor pointing the current adjustment point.

Since color TVs display images consecutively, deviation in convergence sometimes occurs as time passes or as the temperature changes.

In this case, the prior art has the disadvantage that the display of the external video signal must be interrupted for performing digital convergence adjustments.

In addition, when there is a deviation in the synchronizing phase between the internal cross-hatch pattern and the external video signal, digital convergence equivalent to deviation in the synchronizing phase, may not be adjustable.

Furthermore, since the size of the cursor indicating the current adjustment point is fixed, the number of points to be adjusted in a single convergence adjustment cannot be designated as required. Thus, adjustment takes considerable time because the prior art lacks adjustment flexibility.

Still more, the prior art has a basic mode for simultaneously adjusting correction data of all adjustment points on the same vertical and horizontal lines as the cursor position. There is no mode, however, for adjusting correction data of all points on the same line by the same value.

If correction data of points on the same line varies, adjustment points need to be corrected one by one to ensure that all adjustment points on the same line have the same correction data.

Furthermore, the phase for reading correction data is adjusted only horizontally. The readout phase of correction data can be adjusted horizontally by matching the tip of the protrusion to the center line on the screen. However, the prior art is incapable of accurately adjusting the phase vertically because there is no mark on the screen allowing accurate adjustment of the phase in the vertical direction.

### SUMMARY OF THE INVENTION

A digital convergence system which can display an external input video signal and a cursor indicating a convergence correcting position simultaneously, or the cursor and a test pattern simultaneously. In this way the test pattern and/or cursor are superimposed over the external input video image on the screen.

The cursor indicates the position of an adjustment point and is used for specifying a range of adjustment. The position of the cursor and the size of the cursor can also be changed by operation of the control panel. By changing the size of the cursor, required multiple points are adjustable.

### BRIEF DESCRIPTION OF THE DRAWINGS

Fig. 1 is a block diagram of a digital convergence system in a first, second, third and fourth exemplary embodiment of the present invention.

Fig. 2 is an example of a screen for digital convergence adjustment using a cross-hatch pattern.

Fig. 3 is an example of a screen for digital convergence adjustment when a tree image is input as an external video signal.

Fig. 4 is an example of an image displayed on the screen in the second exemplary embodiment.

Fig. 5 is an example of an image displayed on the screen in the third exemplary embodiment.

Fig. 6 is a graph illustrating the position of adjustment points along the abscissa and the size of correction data of adjustment points along the ordinate.

Fig. 7 is a graph illustrating the position of adjustment points along the abscissa and the size of correction data of adjustment points along the ordinate in the third exemplary embodiment.

Fig. 8 is an example of an image displayed using a digital convergence system of the prior art.

Fig. 9 is an example of an image displayed on the screen after adjusting the readout phase of correction data in the fourth exemplary embodiment.

Fig. 10 is an example of an image displayed on the screen after adjusting the readout phase of correction data.

Fig. 11 is an example of an image displayed on the screen before adjusting the readout phase of correction data.

Fig. 12 is an example of an image displayed on the screen before adjusting the readout phase of correction data.

Fig. 13 is a block diagram of a digital convergence system in a fifth exemplary embodiment.

Fig. 14 is an example of a screen for convergence adjustment before adjusting the gain of a D/A converter.

Fig. 15 is a block diagram of a digital convergence system of the prior art.

### DESCRIPTION OF THE PREFERRED EMBODIMENTS

### 1st exemplary embodiment

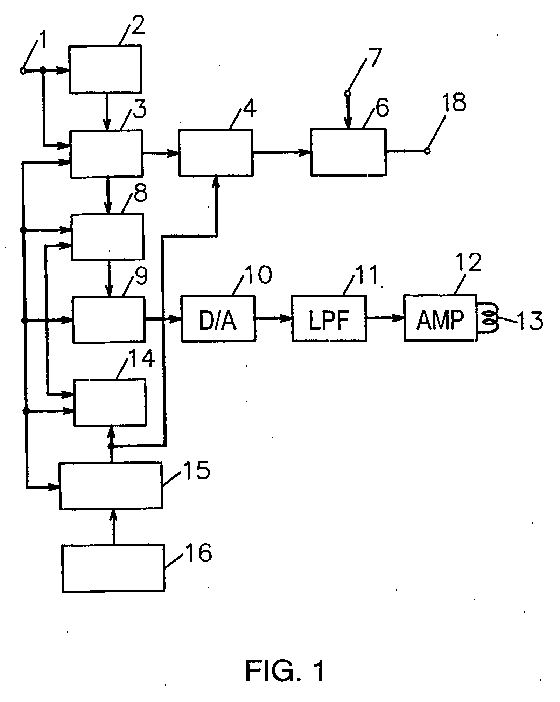

Fig. 1 is a block diagram of a digital convergence system in a first exemplary embodiment of the present invention. Its operation is explained below. A synchronizing signal 1 synchronized to the deflecting current period is input to an address controller 3 and a scanning line counter 2.

The scanning line counter 2 determines the number of scanning lines per frame based on the input synchronizing signal 1, and outputs its result to the address controller 3.

The address controller 3 outputs a signal for controlling cursor/test pattern generator 4 and vertical interpolation processor 8 based on the number of scanning lines per frame as providedby the scanning line counter 2. The cursor/test pattern generator 4 generates a test

pattern and/or a cursor signal based on the control signal input from a microcomputer 15 operated by a control panel 16 and the control signal input from the address controller 3.

The microcomputer 15 selects from a test pattern, cursor signal, and test pattern with cursor signal as an output in response to operation of the control panel 16.

In the same way, vertical interpolation processor 8 calculates the interpolation of vertical convergence between adjustment points, as explained later, based on the control signal from the microcomputer 15 and the control signal from the address controller 3.

A video circuit 6 displays the above cursor signal and test pattern signal generated above as a superimposed image of the test pattern (for example, cross-hatch pattern) and the cursor on the projection screen (not illustrated).

Fig. 2 shows this image displayed. In Fig. 2, Point A is the position of the cursor.

Video circuit 6 is capable of displaying on the screen 1) an external video signal 7, 2) the output of the cursor/test pattern generator 4, or 3) the output of the cursor test/pattern generator 4 on the external video signal 7.

For example, video circuit 6 may display a tree image as shown in Fig. 3. In Fig. 3, A is also the position of the cursor. Therefore, the digital convergence system of the present invention allows the adjustment of convergence while the external video signal is simultaneously displayed on the screen.

Next, convergence is adjustable by writing correction data into nonvolatile memory 14, using a data write key on the control panel 16 for each color to be corrected, such as red for example, while looking at the screen.

For handling several video signal sources, such as those with different numbers of scanning lines, it may be desirable to interpolate between adjustment points in response to the number of scanning lines of each video signal source.

For this purpose, the vertical interpolation processor 8 calculates vertical interpolation based on correction data in nonvolatile memory 14, and continuously writes the vertical interpolation results to volatile memory 9.

Convergence correction data stored in volatile memory 9 is converted to analog data by D/A converter 10, and then smoothed using low-pass filter (LPF) 11. The output of LPF 11 is amplified by amplifier (AMP) 12 and sent to convergence yoke 13 in the form of a convergence correcting current.

Accordingly, a digital convergence system of the first exemplary embodiment is capable of simultaneously displaying the external video signal, the cursor indicating the position for correcting convergence, and/or the test pattern.

### 2nd exemplary embodiment

A second exemplary embodiment of the present invention is explained, as is the first exemplary embodiment, with reference to Fig. 1.

In Fig. 1, video circuit 6 outputs the cursor signal and the generated test pattern signal 18, and displays a superimposed image of the test pattern (for example, cross-hatch pattern) and the cursor on the projection screen.

Fig. 2 shows this image. In Fig. 2, Point A shows the position of the cursor. To change the correction data of points to the right of Point A in the same way as A, the multiple data selection mode (a mode for simultaneously adjusting correction data of multiple adjustment points) is selected using control panel 16. In the multiple data selection mode, control panel 16 can be operated to select and extend the cursor A to the right horizontally.

With this operation, as shown in Fig. 4, the screen displays the cursor extended to the right. Points A, B, and C in Fig. 4 are points to be adjusted, and the bold line indicates the cursor.

The color to be corrected is then selected, and convergence correction data is written to the nonvolatile memory 14 to execute the convergence adjustment while looking at the screen. In Fig. 4, convergence correction data is written to the addresses for points A, B, and C of nonvolatile memory 14. With this type of adjustment, data for the required number of adjustment points are adjusted simultaneously.

The same operation is applicable for adjusting convergence while displaying external video signal 7.

For handling a range of video signal sources, it is desirable to interpolate between adjustment points in response to the number of scanning lines. For this purpose, the vertical interpolation processor 8 calculates vertical interpolation based on correction data in nonvolatile memory 14, and continuously writes the vertical interpolation results to volatile memory 9. Convergence correction data stored in volatile memory 9 is converted to analog data by D/A converter 10, and then smoothed using low-pass filter (LPF) 11. The output of LPF 11 is amplified by amplifier (AMP) 12 and sent to convergence yoke 13 in the form of the convergence correcting signal.

Accordingly, a digital convergence system of the second exemplary embodiment allows the setting of a number of adjustment points to carry out multiple-point convergence adjustments while looking at the screen. Thus, the exemplary embodiment enables the shortening of the adjustment time required, and reduces the number of adjustment steps.

### Third exemplary embodiment

In Fig. 1, a digital convergence system of the present invention inputs synchronizing signal 1, synchronized to the deflecting current period, to address controller 3 and scanning line counter 2.

Scanning line counter 2 determines the number of scanning lines per frame based on the input synchronizing signal 1, and outputs its result to address controller 3.

The address controller 3 outputs a signal for controlling cursor/test pattern generator 4 and vertical interpolation processor 8 based on the number of scanning lines per frame as providedby scanning line counter 2.

The cursor/test pattern generator 4 generates a test pattern and/or a cursor signal based on the control signal input from microcomputer 15 operated by control panel 16 and the control signal input from address controller 3.

The microcomputer 15 selects from a test pattern, cursor signal, and test pattern with cursor signal as an output in response to operation of control panel 16.

In the same way, a vertical interpolation processor 8 calculates the interpolation of vertical convergence between adjustment points, as explained later, based on the control signal input from microcomputer 15 and the control signal input from address controller 3.

The video circuit 6 displays the cursor signal and test pattern signal generated above as a superimposed image of the test pattern (for example, cross-hatch pattern) and the cursor on the projection screen.

Fig. 5 shows this image on the screen. In Fig. 5, Point A shows the position of the cursor. Fig. 5 also shows an image of the test pattern. The numbers in Fig. 5 indicate the positions of the adjustment points: 0 to 15 in the horizontal direction and 0 to 10 in the vertical direction. Hereafter, the position of any adjustment point is indicated using these numbers as (abscissa, ordinate).

For example, the position of cursor A in Fig. 5 can be expressed as (5, 3). In Fig. 5, Line (a-b) indicates adjustment points on the same horizontal line as the cursor position, which means (ordinate = 3). In the same figure, line (c-d) indicates adjustment points on the same vertical line as the cursor position, which means (abscissa = 5). How the convergence is adjusted is explained with reference to adjustment points on (ordinate = 3). In Fig. 7, the horizontal axis indicates the abscissa of adjustment points on (ordinate = 3), and the vertical axis indicates correction data of each adjustment point.

In Fig. 7, the broken line B connects correction data of each adjustment point before adjustment. Correction data of the cursor position A is X1.

Here, for example, a mode for simultaneously adjusting the correction data of all adjustment points on the same horizontal line as the cursor is selected.

In this mode, the convergence adjustment system of the present invention has the following function. If correction data of Point A is increased to D in the vertical interpolation processor 8, the data of all adjustment points on the same horizontal line as Point A will be adjusted to the same data as the adjustment data of Point A, which is X2. A line connecting the correction data of each adjustment point will be the straight line D.

Here, data identical to that of the adjustment data of Point A is written to the address for (ordinate = 3) in nonvolatile memory 14. The same adjustment is applicable to all adjustment points along the same vertical line.

For handling several video signal sources, such as those with different numbers of scanning lines, it is desirable to interpolate between adjustment points in response to the number of scanning lines of each video signal source. For this purpose, the vertical interpolation processor 8 calculates vertical interpolation based on the correction data in nonvolatile memory 14, and continuously writes the vertical interpolation results to volatile memory 9.

Convergence correction data stored in volatile memory 9 is converted to analog data by D/A converter 10, and then smoothed using low pass filter (LPF) 11. The output of LPF 11 is amplified by amplifier (AMP) 12 and sent to convergence yoke 13 in the form of the convergence correcting signal.

Accordingly, the third exemplary embodiment of the present invention saves time spent in convergence adjustment by eliminating the need for individually correcting data of each point when adjustment points along the same horizontal or vertical are required to be corrected to the same data.

### 4th exemplary embodiment

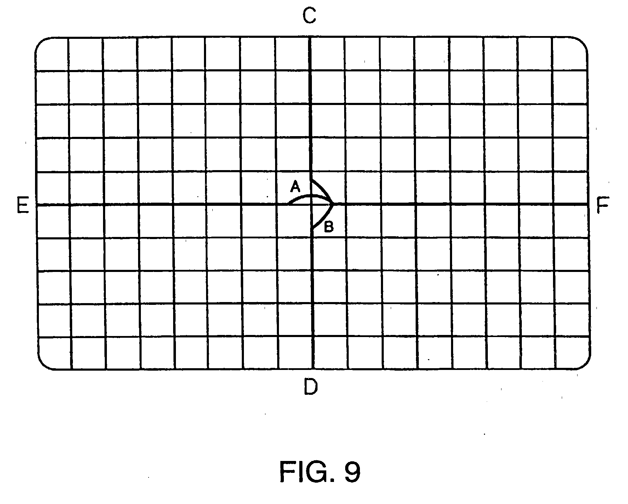

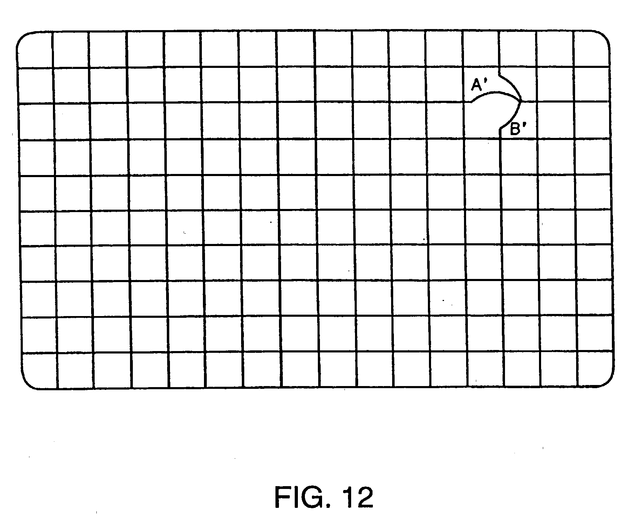

A fourth exemplary embodiment of the present invention is explained with reference to Fig. 1. If the phase for reading data from volatile memory 9 is not appropriately controlled while adjusting the digital convergence, convergence correction data which should be read as Points A and B in Fig. 9 may be read out as Points A' and B' in Fig. 12.

In the data position mode, a cross-hatch pattern is used for adjusting the phase. All convergence correction data to be written to volatile memory 9 is then reset to zero. Two of the three raster colors of red, green, and blue (for example, green and red) are then selected for writing a pre-determined value to nonvolatile memory 14 only for the correction data which is placed at the screen center. For the third color, this correction data is written to the microcomputer.

The screen will look as represented in Fig. 12. In this example, Point A' is a partially curved green cross-hatch (protrusion). Point B' in Fig. 12 is a partially curved red cross-hatch (protrusion).

The operator uses the up, down, left, and right keys on the control panel 16 in Fig. 1 to move Points A' and B' in Fig. 12 to Point A and Point B respectively in Fig. 9 by controlling the microcomputer 15 which in turn controls the phase of the data read from address controller 3. Adjustment while moving Point A' in Fig. 12 to Point A in Fig. 9 can be confirmed by matching the tip of the mark for Point A in Fig. 9 to Line CD running through the center of the screen. Adjustment while moving Point B' to Point B can be confirmed by matching the tip of the mark for Point B in Fig. 9 to Line EF running through the center of the screen.

### Fifth exemplary embodiment

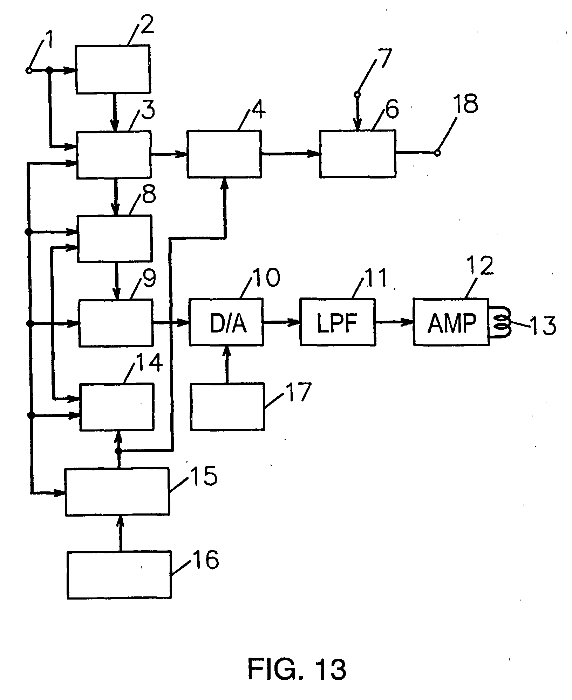

A fifth exemplary embodiment of the present invention is explained with reference to Fig. 13.

Explanations for configuration and operation of the block diagram illustrated in Fig. 13 are omitted here because they are the same as for Fig. 1 except for gain controller 17.

In projection TVs, the convergence correction required depends largely on the distance between the screen and projector; in other words, the projection distance.

Therefore, the degree of convergence correction may be excessive in proportion to the projection distance, which may cause difficulty in convergence adjustment.

In this case, the gain of the D/A converter without an adjustment is considered excessive.

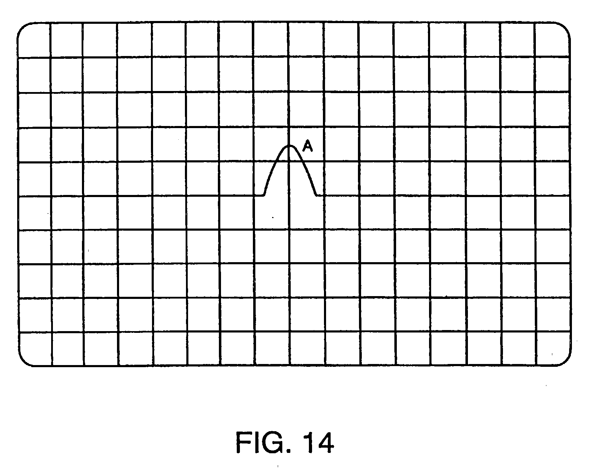

If digital convergence adjustment is conducted under these conditions, the tip of the protrusion may extend beyond the adjacent cross-hatch intersection as shown in Fig. 14.

To avoid this, the operator uses control panel 16 to input a control signal from microcomputer 15 to gain controller 17 for adjusting the gain of D/A converter 10, while looking at the screen, so that the appropriate digital convergence adjustment can be carried out. This also reduces noise on the screen caused by excessive gain in the D/A converter.

As explained above, a digital convergence system of the present invention allows adjustment of convergence while looking at the screen with the external video signal continuously displayed on the screen. The present invention also enables the selection of a number of adjustment points to be simultaneously adjusted by changing the size of the cursor. Moreover, the present invention reduces the time spent for adjustment and the number of adjustment steps by providing of a mode for simultaneously adjusting the data of all adjustment points on the same vertical or horizontal line as the cursor position to the data identical to that of the cursor position.

Furthermore, the present invention enables the accurate adjustment of the data readout phase both horizontally and vertically while performing digital convergence adjustments, and also allows the adjustment of convergence, whose required degree changes according to installation conditions, while looking at the screen.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A digital convergence system, for use with a screen and an input video signal (7), comprising:
a scanning line counter (2) for providing a count of scanned lines of the input video signal;
an address controller configured to provide a first test pattern control signal and a first vertical interpolation control signal responsive to the count of scanned lines provided by said scanning line counter;
a control panel (16) configured to accept user input signals indicating a color correction;
a microcomputer (15) responsive to output signals from said control panel, said output signals based on said user input signals, said microcomputer being configured to produce a second test pattern control signal and a second vertical interpolation control signal;
a test pattern generator (4) configured to generate a test pattern signal representing a test pattern responsive to the first and second test pattern control signals;
a vertical interpolation processor (8) configured to calculate a vertical convergence interpolation responsive to said first and second vertical interpolation control signals; and
a video circuit (6) configured to select an image to be displayed from said test pattern generator and the input video signal, said digital convergence system **characterized** in that:
said test pattern signal generated by said test pattern generator defines i) multiple convergence adjustment points in at least one of a horizontal direction and a vertical direction on the screen, and ii) a cursor which is used to select at least one adjustment point from said multiple convergence adjustment points; and
said video circuit is responsive to the test pattern generator to superimpose said cursor over the input video signal when the input video signal is displayed on the screen to allow an operator to select convergence adjustment points while viewing the input video signal.

2. A digital convergence system as defined in Claim 1, wherein:
the microcomputer and control panel are configured to change said cursor in size wherein said changed cursor indicates that a plurality of said multiple convergence adjustment points are selected for adjustment.

3. A digital convergence system as defined in Claim 1, wherein :
the test pattern generator, the microcomputer, and the control panel are configured to modify correction data of a plurality of said multiple convergence adjustment points, said plurality of multiple convergence adjustment points being positioned along at least one of a horizontal line and a vertical line of said test pattern, said correction data being modified with a value identical to a correction data value applied to one of said adjustment points.

4. A digital convergence system as defined in Claim 1, wherein the video circuit is configured to selectively superimpose said test pattern on the input video signal displayed on the screen.

5. A digital convergence system as defined in Claim 1, further comprising:
a nonvolatile memory (14) configured to store convergence correction data responsive to a storage control signal generated by said microcomputer.

6. A digital convergence system as defined in Claim 5, wherein said microcomputer is configured to apply identical adjustment data to a plurality of adjustment points along one of a horizontal line and a vertical line, said adjustment data being adjustment data which has been applied to one adjustment point selected from said plurality of adjustment points by said controller and stored in said nonvolatile memory.

7. A digital convergence system as defined in Claim 1, further comprising:
a memory (9)configured to hold data calculated by said vertical interpolation processor wherein said microcomputer generates mark data representing a phase adjustment of the convergence correction data and stores the mark data in the memory;
a digital to analog (D/A) converter (10) configured to convert the data held by said memory into an analog signal;
a low pass filter (11) configured to apply a low-pass filter frequency response characteristic to the analog signal provided by said D/A converter; and
an amplifier configured to amplify an output of said D/A converter and generate a convergence output signal;
wherein:
said address controller is configured to adjust of said convergence correction data in phase responsive to a second control signal generated by said microcomputer;
said memory is configured to store said phase adjusted convergence correction data responsive to a storage control signal generated by said microcomputer; and
said vertical interpolation processor is configured to calculate a vertical interpolation of said video signal responsive to said phase adjusted convergence correction data stored in said memory to converge said video signal with a reference video signal.

8. A digital convergence system as defined in Claim 7, further comprising:
a gain control (17) configured to adjust the digital convergence output signal in magnitude.

9. A digital convergence system as defined in Claim 7, further comprising:
a nonvolatile (14) memory configured to store mark data generated by said microcomputer (15) representing an adjustment to be applied to one of a plurality of color signals.

10. A digital convergence system as defined in Claim 7, further comprising:
a volatile memory (9) configured to store mark data generated by said microcomputer representing an adjustment to be applied to one of a plurality of color signals.

11. A digital convergence system as defined in Claim 7, wherein said microcomputer (15) is configured to generate mark data for adjustment of the output correction data.

12. A digital convergence system as defined in Claim 7, further comprising a convergence yoke (13) configured to be driven by said convergence output signal.

13. A digital convergence adjustment method, for use with a screen and an input video signal comprising the steps of:
counting scanned lines of the input video signal and producing a scanned line count;
generating a first test pattern control signal and a first vertical interpolation signal responsive to the count of scanned lines;
accepting user input signals indicating a color correction;
generating a second test pattern control signal and a second vertical interpolation signal responsive to said user input signals;
generating a test pattern signal representing a test pattern responsive to said first and second test pattern control signals ;
calculating a vertical convergence interpolation responsive to said first and second vertical interpolation control signals; and
selecting an image to be displayed from said test pattern signal and the input video signal, said digital convergence adjustment method **characterized** by:
generating correction data responsive to the user input signals;
storing the correction data in a memory;
generating a mark for display in at least one of a horizontal direction and a vertical direction on the screen responsive to the correction data;
adjusting a position of the mark to a central portion of the screen; and
generating mark data representing a phase adjustment of the correction data read from the memory responsive to the user input signals.

14. A digital convergence adjustment method as defined in Claim 13 comprising the further step of:
generating the correction data to display the video signal with correction applied as the correction data is being updated.
